(19) Europäisches Patentamt
European Patent Office
Office européen des brevets

(11) Veröffentlichungsnummer: **0 000 141**
**A1**

(12) # EUROPÄISCHE PATENTANMELDUNG

(21) Anmeldenummer: **78100146.6**

(22) Anmeldetag: **13.06.78**

(51) Int. Cl.²: **C 08 L 55/02**, C 08 L 51/04, C 08 L 25/12

(30) Priorität: **18.06.77 DE 2727483**

(43) Veröffentlichungstag der Anmeldung: **10.01.79 Patentblatt 79/1**

(84) Benannte Vertragsstaaten: **BE DE FR GB NL**

(71) Anmelder: **BASF Aktiengesellschaft, Carl-Bosch-Strasse 38, D-6700 Ludwigshafen (DE)**

(72) Erfinder: **Gausepohl, Hermann, Dr., Neuweg 10, D-6704 Mutterstadt (DE)**

(72) Erfinder: **Naarmann, Herbert, Dr., Haardtblick 15, D-6719 Wattenheim (DE)**

(72) Erfinder: **Penzien, Klaus, Dr., Bensheimer Ring 18, D-6710 Frankenthal (DE)**

(72) Erfinder: **Stephan, Rudolf, Dr., An der Froschlache 3, D-6700 Ludwigshafen (DE)**

(54) **Selbstverl schende thermoplastische Formmassen.**

(57) Selbstverlöschende thermoplastische Formmassen auf Basis von mit Kautschuk schlagzäh modifizierten Styrol-Acrylnitril- Copolymerisaten, die halogenierte Styrol-Oligomere als wirksames Flammschutzmittel enthalten.

Das wirksame Flammschutzmittel ist genügend thermostabil, stört die Verarbeitbarkeit auf konventionellen Maschinen nicht, neigt nicht zur Korrosion und zur Belagsbildung auf diesen Maschinen. Ausserdem wird die Schlagzähigkeit der Polymerisate durch den Zusatz praktisch kaum beeinträchtigt.

Das wirksame Flammschutzmittel weist in der Regel einen Polymerisationsgrad zwischen 3 und 200 auf; es lässt sich auf übliche Weise in das Polymerisat einarbeiten, das Polymerisat kann gegebenenfalls noch zusätzliche Synergisten und Verarbeitungshilfsmittel, die in üblicher Weise und in üblichen Mengen eingebracht werden, enthalten.

EP 0 000 141 A1

## Selbstverlöschende thermoplastische Formmassen

Die Erfindung betrifft thermoplastische Formmassen auf Basis von mit einem Kautschuk schlagzäh modifizierten Styrol-Acrylnitril-Copolymerisaten, die mit einer organischen Halogenverbindung flammfest ausgerüstet sind.

Kautschukmodifizierte Styrol-Acrylnitril-Copolymerisat-Gemische sind bekannt. Sie rden im allgemeinen hergestellt durch Pfropfmischpolymerisation von Styrol und Acrylnitril in Gegenwart eines Kautschuk sowie gegebenenfalls nachträgliches Abmischen dieses Pfropfproduktes mit einer separat hergestellten Hartkomponente, die aus einem Styrol-Acrylnitril-Copolymerisat besteht. Je nach dem, ob bei der Herstellung dieser Formmassen als Kautschuk ein Butadien-Polymerisat, ein elastomeres Acrylester-Polymerisat oder ein Äthylen-Propylen-Kautschuk eingesetzt worden ist, werden diese Formmassen auch als ABS-, ASA- oder AES-Polymerisate bezeichnet. Diese kautschuk-modifizierten Styrol-Acrylnitril-Polymerisate vereinen bekanntermaßen wertvolle mechanische Eigenschaften, insbesondere hohe Zähigkeit, mit guter Beständigkeit gegen Chemikalien. Sofern bei Ihrer Herstellung ein gesättigter Kautschuk eingesetzt worden ist, sind sie darüber hinaus witterungs- und alterungsbeständig. Diese gute Eigenschafts-

Vo/ro

kombination ermöglicht ihren Einsatz zur Herstellung von technischen Gehäusen, elektrischen Schaltelementen, Küchengeräten, Kraftfahrzeugteilen etc. Für zahlreiche Anwendungen wird dabei ein nichttropfendes Verlöschen der Formmassen nach kurzzeitiger Beflammung verlangt.

Die Flammfest-Ausrüstung von Styrol-Polymerisaten mit organischen Halogenverbindungen ist ebenfalls seit langem bekannt. Versuche, die Entflammbarkeit von Kautschukmodifizierten Styrol-Acrylnitril-Copolymerisaten des ABS-, ASA- - oder AES-Typs durch Zugabe der für Polystyrol üblichen und bekannten halogenhaltigen Flammschutzmittel zu verringern, haben bislang nur zu einem geringen Erfolg geführt. So werden in der DT-PS 1 123 823 bromierte Diphenyle oder Diphenyläther als Flammschutzmittel für Polystyrol beschrieben, wobei diese Bromverbindungen vor allem in Kombination mit Antimontrioxid als Synergist Anwendung finden. Aus der DT-OS 23 58 855 ist der Einsatz von bromierten Oligomeren oder Polymeren des DI-, Tri- oder Tetraalkylbenzols als Flammschutzmittel für Styrol- oder Olefinpolymerisate bekannt. Wendet man diese bekannten Flammschutzmittel für die Flammfestausrüstung von kautschukmodifizierten Styrol-Acrylnitril-Copolymerisaten an, wie es beispielsweise in der DT-OS 20 46 795 für die halogenierten Diphenyle und Diphenyläther im Fall der Flammfestausrüstung von ABS-Polymerisaten beschrieben ist, so erhält man wohl Formmassen mit genügend kurzen Verlöschzeiten. Es stellt sich jedoch heraus, daß bei längerer Lagerung derart flammfest ausgerüsteter Formmassen bei Raumtemperatur oder in der Wärme ein weißer Belag auftritt, der auf Auswanderung (Migration) des Flammschutzmittels oder bestimmter Anteile des Flammschutzmittels zurückzuführen ist. Die schon aus optischen Gründen nicht akzeptablen Belagsbildung der Polymerisate verändert nicht nur deren Flammwidrigkeits-Verhalten, sondern hierdruch wer-

den auch die elektrischen Isoliereigenschaften der Polymerisate herabgesetzt.

Neben der Forderung, daß das Flammschutzmittel nicht auswandert bzw. "ausschwitzt", betreffen weitere wichtige Forderungen an das Flammschutzmittel für kautschukmodifizierte Styrol-Acrylnitril-Copolymerisate die Verarbeitungseigenschaften auf Extrudern oder Spritzgußmaschinen. Hier werden vor allem hinreichende Thermostabilität und ausreichende Fließfähigkeit bei Temperaturen im Bereich von 200 bis 280°C gefordert. Die Flammschutzmittel dürfen dabei weder Korrosionserscheinungen an den Verarbeitungsmaschinen hervorrufen, noch eine Belagsbildung auf den Maschinen bewirken. In der DT-OS 23 28 535 werden schwer brennbare ABS--Polymerisate beschrieben, die als Flammschutzmittel bestimmte halogenierte bis-Phenoxy- oder -Thiophenyl-alkane enthalten und die obengenannten Forderungen bezüglich Flammwidrigkeitsverhalten, Auswanderungsbeständigkeit und thermischer Stabilität des Flammschutzmittels sowie guter mechanischer Eigenschaften der Formmassen weitgehend erfüllen sollen. Die gemäß der DT-OS 23 28 535 als Flammschutzmittel für die ABS-Polymerisate zum Einsatz kommenden halogenierten bis-Phenoxy- oder -Thiophenyl-alkane müssen jedoch nach relativ aufwendigen Verfahren hergestellt werden. Ferner hat sich gezeigt, daß die in der DT-OS 23 28 535 beschriebenen flammfest ausgerüsteten ABS--Polymerisate hinsichtlich ihres Eigenschaftsbildes immer noch nicht völlig zufriedenstellend sind.

Aufgabe der vorliegenden Erfindung war es daher, ein Flammschutzmittel für kautschukmodifizierte Styrol-Acrylnitril--Copolymerisate aufzuzeigen, welches die angeführten Nachteile nicht aufweist. Das Flammschutzmittel soll in wirtschaftlich einfacher Weise erhalten werden können und insbesondere bereits in möglichst geringen Mengen eine mög-

lichst hohe Flammschutz-Wirkung in den kautschukmodifizierten Styrol-Acrylnitril-Copolymerisaten zeigen. Gleichzeitig sollen die damit flammfest ausgerüsteten kautschukmodifizierten Styrol-Acrylnitril-Copolymerisate eine gute Verarbeitbarkeit auf konventionellen Maschinen ausweisen, ohne daß es zu Korrosionserscheinungen und zu Belagsbildungen kommt; es soll keine Migration des Flammschutzmittels aus dem Fertigteil erfolgen und die mechanischen Eigenschaften der kautschukmodifizierten Styrol-Acrylnitril-Copolymerisate, insbesondere deren Schlagzähigkeit, sollen durch den Zusatz des Flammschutzmittels nicht negativ beeinflußt, zumindest nicht wesentlich beeinträchtigt werden, so daß flammwidrige Fertigteile mit einem hohen mechanischen Niveau erhalten werden können, die in ihrem Eigenschaftsbild den bekannten flammfest ausgerüsteten kautschukmodifizierten Styrol--Acrylnitril-Copolymerisaten überlegen sind.

Es wurde gefunden, daß diese Aufgabe durch den Einsatz von halogenierten Styrol-Oligomeren als Flammschutzmittel für die kautschukmodifizierten Styrol-Acrylnitril-Copolymerisate gelöst werden kann.

Gegenstand der vorliegenden Erfindung sind demzufolge thermoplastische Formmassen aus

(A) 6 bis 100 Gewichtsprozent, bezogen auf (A + B), eines Pfropfproduktes, hergestellt durch Pfropfpolymerisation von

1. 10 bis 95 Gewichtsprozent, bezogen auf (A), eines Gemisches aus Styrol und Acrylnitril oder deren Alkylderivaten im Gewichtsverhältnis 90 : 10 bis 60 : 40 in Gegenwart von

2. 90 bis 5 Gewichtsprozent, bezogen auf (A), eines kautschukartigen Polymerisats mit einer Glasübergangstemperatur unter 0°C.

(B) 0 bis 94 Gewichtsprozent, bezogen auf (A + B), eines Copolymerisats aus Styrol und Acrylnitril oder deren Alkylderivaten im Gewichtsverhältnis 90 : 10 bis 60 : 40, wobei der Gehalt des kautschukartigen Polymerisats (A 2) in den Formmassen, bezogen auf die Summe von (A + B), 5 bis 40 Gewichtsprozent betragen soll.

(C) einer wirksamen Menge einer organischen Halogenverbindung als Flammschutzmittel sowie

(D) gegebenenfalls weiteren Zusatzstoffen.

Die Formmassen sind dadurch gekennzeichnet, daß diese als Flammschutzmittel halogenierte Styrol-Oligomere enthalten.

Die halogenierten Styrol-Oligomere sind als solche bekannt und können gemäß der DT-OS 25 15 473 insbesondere zur Flammfestausrüstung von Polyestern verwendet werden. Es hat sich nun überraschenderweise gezeigt, daß sich die halogenierten Styrol-Oligomere ebenso hervorragend und unter Vermeidung der eingangs beschriebenen Nachteile für die Flammfestausrüstung von kautschukmodifizierten Styrol-Acrylnitril-Polymerisaten verwenden lassen und dabei zu Produkten mit gegenüber dem Stand der Technik verbesserten Eigenschaften führen. Dies war keineswegs vorhersehbar oder zu erwarten, da, wie beispielsweise aus den DT-OS 20 46 795 und 23 28 535 zu entnehmen ist, halogenhaltige Flammschutzmittel, die in anderen Kunststoffsystemen Verwendung finden, üblicherweise nicht, zumindest nicht ohne weiteres und mit dem gleichen Erfolg, auch für kautschukmodifizierte Styrol-Acrylnitril-Copolymerisate einzusetzen sind.

Für den Zweck der vorliegenden Erfindung können alle üblichen und bekannten kautschukmodifizierten Styrol-Acryolnitril-Copolymerisate des ABS-, ASA- oder AES-Typs eingesetzt werden. Hierbei handelt es sich um Polymerisate bzw. Polymerisat-Gemische, die durch Pfropfpolymerisation einer Mischung aus Styrol und Acrylnitril und/oder deren Alkylderivaten in Gegenwart eines Kautschuks mit einer Glasübergangstemperatur unter 0°C, vorzugsweise unter -20°C und insbesondere unter -40°C, sowie gegebenenfalls Abmischen dieser Pfropfprodukte mit separat hergestelltem Copolymerisat aus Styrol und Acrylnitril und/oder deren Alkylderivaten erhalten worden sind. Die Ermittlung der Glasübergangstemperatur des eingesetzten Kautschuks kann dabei nach den bei B. Vollmer, Grundriß der makromolekularen Chemie, Seiten 406 bis 410, Springer-Verlag, Heidelberg (1962), angegebenen Methoden erfolgen.

Als Kautschuk für die Herstellung des Pfropfproduktes (Komponente A) kommen z.B. dienhaltige Polymerisate in Betracht. Hierzu zählen vor allem die Homopolymerisate des Butadiens, Isoprens und 2,3-Dimethylbutadiens. Ebenso können Copolymerisate dieser Diene untereinander oder mit anderen copolymerisierbaren Monomeren, beispielsweise Styrol oder Acrylnitril, eingesetzt werden, wobei der Gehalt dieser anderen copolymerisierbaren Monomeren in den Dienpolymerisaten im allgemeinen 30 Gewichtsprozent nicht übersteigt. Gleichermaßen können als Kautschuke Polymerisate aus 20 bis 80 Gewichtsprozent, vorzugsweise 30 bis 70 Gewichtsprozent, Butadien und 80 bis 20 Gewichtsprozent, vorzugsweise 70 bis 30 Gewichtsprozent, eines Acrylsäurealkylesters mit 1 bis 8 Kohlenstoffatome in der Alkoholkomponente, vorzugsweise Acrylsäure-n-butylester, verwendet werden. Auch diese Butadien-Acrylsäureester-Copolymerisate können gegebenenfalls noch bis zu 30 Gewichtsprozent an weiteren copolymerisierbaren Monomeren, wie beispielsweise Isopren,

Styrol, Acrylnitril oder Vinylalkyläther einpolymerisiert enthalten. Eine weitere Gruppe von Kautschuken, die für die Herstellung des Pfropfproduktes (Komponente A) in Betracht kommen, sind die Polyacrylsäurealkylester von Alkoholen mit 1 bis 8 Kohlenstoffatomen im Alkylrest. Als solche seien beispielsweise genannt Polyäthylacrylat, Polyäthylhexylacrylat sowie insbesondere Poly-n-butylacrylat. Besonders günstig ist es, wenn die Polyacrylate durch Einpolymerisation von 1 bis 5 Gewichtsprozent einer Verbindung mit mindestens zwei, nicht in Konjugation miteinander stehenden olefinischen Doppelbindungen vernetzt sind. Als weitere Gruppe von Kautschuken seien die EPDM-Kautschuke genannt, die durch Terpolymerisation von Äthylen, Propylen und einem Dien mit zwei nicht konjugierten olefinischen Doppelbindungen erhalten werden.

Zur Herstellung des Pfropfproduktes (Komponente A) wird ein Monomeren-Gemisch aus Styrol und Acrylnitril im Gewichtsverhältnis 90 : 10 bis 60 : 40, vorzugsweise 75 : 25 bis 65 : 35, in Gegenwart des Kautschuks polymerisiert, wobei mindestens ein Teil der Monomeren auf den Kautschuk aufgepfropft wird. Dabei können das Styrol und/oder das Acrylnitril in dem Monomeren-Gemisch ganz oder teilweise durch die entsprechenden Alkylderivate dieser Verbindungen, wie α-Methylstyrol und Methacrylnitril, ersetzt sein. Die Pfropfpolymerisation des Monomeren-Gemisches aus Styrol und Acrylnitril und/oder deren Alkylderivate in Gegenwart des Kautschuks kann in üblicher und bekannter Weise in Lösung, Suspension oder vorzugsweise in wäßriger Emulsion, die den vorgebildeten Kautschuk dispergiert enthält, mittels der üblichen Katalysatoren und in Gegenwart der gebräuchlichen Polymerisationshilfsstoffe, wie beispielsweise Emulgier- oder Suspendiermittel, Molekulargewichtsregler und Puffersubstanzen, durchgeführt werden. Vorzugsweise werden in den erfindungsgemäßen Formmassen Pfropfprodukte

(Komponente A) eingesetzt, die durch Emulsions-Pfropfpolymerisation erhalten worden sind, wie es beispielsweise in den DT-PSen 1 260 135 und 1 238 207 für die Herstellung von ABS- und ASA-Polymerisaten beschrieben ist.

Zur Herstellung des Propfproduktes (Komponente A) werden im allgemeinen 10 bis 95 Gewichtsprozent des Monomeren-Gemisches aus Styrol und Acrylnitril und/oder deren Alkylderivaten in Gegenwart von 90 bis 5 Gewichtsprozent des als Pfropfgrundlage dienenden Kautschuks polymerisiert. Je nach Kautschuk-Gehalt des Pfropfproduktes (Komponente A) kann dieses noch mit einem separat hergestellten Styrol-Acrylnitril-Copolymerisat (Komponente B) in Mengen bis zu 94 Gewichtsprozent, bezogen auf die Summe der Komponenten A und B, abgemischt werden, wobei das Styrol und/oder das Acrylnitril in dem Copolymerisat ganz oder teilweise durch die entsprechenden Alkylderivate ersetzt sein kann. Die Komponenten A und B sind dabei so zu wählen, daß der Gehalt des als Pfropfgrundlage dienenden Kautschuks in den erfindungsgemäßen Formmassen im Bereich von 5 bis 40 Gewichtsprozent, bezogen auf die Summe (A + B), liegt. Das freie Copolymerisat (Komponente B) wird in üblicher und bekannter Weise durch Polymerisation eines Monomeren-Gemisches aus Styrol und Acrylnitril im Gewichtsverhältnis 90 : 10 bis 60 : 40, vorzugsweise 75 : 25 bis 65 : 35, in Masse, Lösung, oder wäßriger Dispersion hergestellt, wobei das Styrol und/oder das Acrylnitril ganz oder teilweise durch die Alkylderivate dieser Verbindungen, wie α-Methylstyrol und Methylacrylnitril, ersetzt sein kann. Das Abmischen des freien Copolymerisats (Komponente B) mit dem Pfropfprodukt (Komponente A) kann auf bekannte und gebräuchliche Art und Weise erfolgen, wie beispielsweise durch gemeinsames Extrudieren, Kneten oder Verwalzen der beiden Komponenten.

Vorzugsweise enthalten die erfindungsgemäßen Formmassen als Komponente A 20 bis 50 Gewichtsprozent, bezogen auf (A + B), eines Pfropfproduktes, welches hergestellt worden ist durch Emulsions-Pfropfmischpolymerisation von 20 bis 50 Gewichtsprozent, bezogen auf das Pfropfprodukt A, eines Monomeren-Gemisches aus Styrol und Acrylnitril oder deren Alkylderivaten in Gegenwart von 80 bis 50 Gewichtsprozent, bezogen auf das Pfropfprodukt A, eines ebenfalls durch Emulsions-Polymerisation hergestellten kautschukartigen Polymerisats der obenbeschriebenen Art als Pfropfgrundlage, und als Komponente B 80 bis 50 Gewichtsprozent, bezogen auf (A + B), eines separaten hergestellten Copolymerisats aus Styrol und Acrylnitril und/oder deren Alkylderivate in den oben angegebenen Gewichtsverhältnissen.

Erfindungsgemäß werden für die kautschukmodifizierten Styrol-Acrylnitril-Copolymerisate aus den Komponenten A und B als Flammschutz (Komponente C) halogenierte Styrol-Oligomere eingesetzt. Unter Styrol-Oligomeren sollen im Sinne dieser Erfindung dabei sowohl die Oligomeren des Styrols selbst als auch der kern- und seitenketten-alkylierten Styrols verstanden werden. Insbesondere kommen die Homo-Oligomeren des Styrols und der kernalkylierten Styrole in Frage. Geeignete kernalkylierte Styrole sind dabei vor allem solche, die eine oder mehrere kernständigen C-Atom unverzweigte Alkylgruppen enthalten, beispielsweise Vinyltoluol, Vinyläthylbenzol oder Vinylpropylbenzol. In gleicher Weise wie die Homooligomeren können auch die Co-Oligomeren des Styrols mit α-Methylstyrol und/oder den kernalkylierten Styrolen Anwendung finden. Bevorzugt werden jedoch die Homo-Oligomeren des Styrols eingesetzt.

Bei den erfindungsgemäß zu verwendenden halogenierten Styrol-Oligomeren handelt es sich im algemeinen um die chlorierten und/oder bromierten Styrol-Oligomere, wobei die bromierten Styrol-Oligomere wiederum bevorzugt sind. Als besonders vorteilhaft haben sich die kernhalogenierten, thermostabilen Styrol-Oligomere der allgemeinen Formel (I)

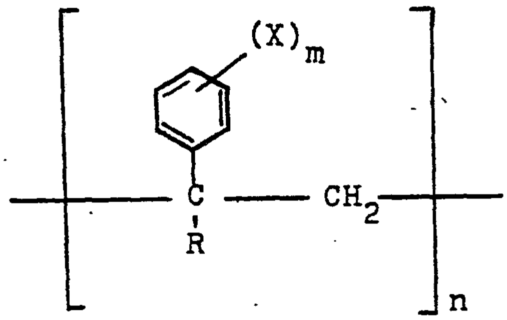

(I)

erwiesen, worin X = Halogen, insbesondere Chlor und/oder Brom, R = Wasserstoff oder ein aliphatischer Rest, insbesondere Wasserstoff oder ein Alkylrest wie $CH_3$ oder $C_2H_5$, m = eine Zahl zwischen 1 und 5, vorzugsweise von 2 bis 4, und n = den Polymerisationsgrad der Styrol-Oligomeren bedeuten. Unter den Halogensubstituenten X ist Brom besonders bevorzugt; R ist vorzugsweise Wasserstoff.

Die kernhalogenierten, thermostabilen Styrol-Oligomere der allgemeinen Formel (I) können nach bekannten Verfahren hergestellt werden, beispielsweise durch Polymerisation von geeigneten bromierten Styrolen. Besonders vorteilhaft erhält man sie nach dem in der DT-OS 25 37 385 beschriebenen Verfahren, gemäß dem die beispielsweise durch thermische Oligomerisation von Styrol erhaltenen Styrol-Oligomeren zunächst selektiv hydriert und diese selektiv hydrierten Styrol-Oligomeren dann in halogenhaltigen Lösungsmitteln in Gegenwart von Lewis-Säuren als Katalysatoren bei Temperaturen unterhalb von 20°C bromiert werden. Nach quantitativer Entfernung des Katalysators sowie des Lösungsmittels erhält man Produkte mit einem Bromgehalt von 40 bis 80 Gewichtsprozent, die selbst bei Temperaturen von 240 bis 340°C keine Zersetzung zeigen.

Als Flammschutzmittel (Komponente C) gemäß der vorliegenden Erfindung geeignet sind weiterhin entsprechend hergestellte Bromierungsprodukte aus nicht-hydrierten Styrol-Oligomeren. Obgleich ihre thermische Stabilität etwas niedriger liegt als die der aus den selektiv-hydrierten Styrol-Oligomeren erhaltenen Produkte, ist sie jedoch für die Verarbeitung der kautschukmodifizierten Styrol-Acrylnitril-Copolymerisate noch ausreichend hoch. Die Herstellung der erfindungsgemäß einzusetzenden bromierten Styrol-Oligomeren kann in einfacher und eleganter Weise auch im Eintopf-Verfahren direkt aus Styrol und Brom erfolgen, wie es beispielsweise in der Patentanmeldung P 26 51 435.2 beschrieben ist. Hiernach wird zunächst Styrol in Lösung in Gegenwart von Lewis-Säure-Katalysatoren kationisch polymerisiert und der Reaktionslösung anschließend, gegebenenfalls nach Zusatz einer weiteren Menge an Lewis-Säure-Katalysator, Brom zugegeben. Die zum Zwecke der Erfindung einzusetzenden bromierten Styrol-Oligomeren haben im allgemeinen einen Bromgehalt im Bereich von 40 bis 80 Gewichtsprozent, vorzugsweise 50 bis 80 Gewichtsprozent. Es handelt sich hierbei um farblose bis gelbe Festkörper mit Schmelzpunkten/Erweichungspunkten von etwa 100°C bis 220°C.

Der mittlere Polymerisationsgrad der halogenierten Styrol-Oligomeren liegt üblicherweise im Bereich von 3 bis 200. Formmassen mit einer optimalen Eigenschafts-Kombination bezüglich Flammwidrigkeits-Verhalten, Migrationsbeständigkeit des Flammschutzmittels, Fließverhalten und Verarbeitbarkeit der Formmassen sowie der mechanischen Eigenschaften der hieraus hergestellten Fertigteile werden erhalten, wenn gemäß einer bevorzugten Ausführungsform der Erfindung der mittlere Polymerisationsgrad der halogenierten Styrol-Oli-

gomere im Bereich von 7 bis 50, insbesondere von 7 bis 30, liegt, wobei auch cyclische Oligomere geeignet sind. Molgewichtsverteilung und somit auch Polymerisationsgrad der nicht-halogenierten und halogenierten Styrol-Oligomeren entsprechen sich dabei weitgehend bzw. vollständig.

Es ist günstig, wenn die kautschukmodifizierten Styrol-Acrylnitril-Copolymerisate zusätzlich zu den erfindungsgemäßen Flammschutzmitteln noch einen oder mehrere Flammschutzmittel-Synergisten enthalten. Als Synergisten für die halogenierten Styrol-Oligomere kommen praktisch alle bekannten in Frage; besonders bevorzugt sind Oxide von Metallen Vb-Gruppe des Periodensystems, insbesondere Antimontrioxid. Besonders wirksam ist Antimontrioxid, das auf geeigneten anorganischen Trägern, wie z.B. feinteiligem Kaolin, kalziniertem Kaolin oder Talkum, niedergeschlagen wurde.

Sofern Antimontrioxid als Flammschutzmittel-Synergist zugegeben wird, liegt dessen Menge im allgemeinen zwischen 2 und 10 Gewichtsprodzent, vorzugsweise zwischen 3 und 6 Gewichtsprozent, bezogen auf die Komponente (A + B).

Die zur Flammfestausrüstung der kautschukmodifizierten Styrol-Acrylnitril-Copolymerisate notwendige Menge an halogenierten Styrol-Oligomeren hängt von deren Halogen-Gehalt ab. Die halogenierten Styrol-Oligomere werden in einer wirksamen Menge verwendet, wobei festgestellt wurde, daß im allgemeinen 5 bis 30 Gewichtsprozent der halogenierten Styrol-Oligomere, bezogen auf die Komponenten (A + B), zur Erzielung einer hinreichenden Flammschutzwirkung erforderlich ist. Vorzugsweise werden die halogenierten Styrol-Oligomere in Mengen von 10 bis 25 Gewichtsprozent, bezogen auf die Komponenten (A + B), verwendet. Bemerkenswert ist dabei, daß die bevorzugt eingesetzten bromierten Styrol-Oligomere mit einem mittleren Polymerisationsgrad von 7 bis 50, vorzugsweise von 7 bis 30, und Bromgehalten von 50 bis 80 Gewichtsprozent, vorzugsweise von 55 bis 70 Gewichtsprozent, in verhältnismäßig großen Zusatzmengen eingesetzt werden können, ohne daß das Ausschwitzverhalten, die Korrosionsfestigkeit oder die Schlagzähigkeit der Formmassen beeinträchtigt werden. Werden bromierte Styrol-Oligomere eingesetzt, soll der Bromgehalt der erfindungsgemäßen Formmassen zwischen etwa 2 und etwa 25 Gewichtsprozent, bevorzugt zwischen etwa 4 und etwa 20 Gewichtsprozent, bezogen auf die Komponenten (A + B), liegen.

Die kautschukmodifizierten Styrol-Acrylnitril-Copolymerisate (Komponenten A und B) können neben dem Flammschutzmittel sowie dem Flammschutzmittel-Synergist noch weitere Zusatzstoffe in üblichen Mengen enthalten, wie z.B. übliche Verarbeitungshilfsmittel, Antistatika, Antioxidantien, Stabilisatoren gegen Vergilbung und thermische Schädigung, Farbpigmente und/oder Füllstoffe, wie Glasfasern oder Glaskugeln.

Die halogenierten Styrol-Oligomere sowie gegebenenfalls der Synergist und die weiteren Zusatzstoffe können in die kautschukmodifizierten Styrol-Acrylnitril-Copolymerisate nach irgendeinem geeigneten und bekannten Mischverfahren eingebracht werden. Die Einarbeitung der Stoffe in die kautschukmodifizierten Styrol-Acrylnitril-Copolymerisate kann beispielsweise auf der Walze, im Extruder oder in einem Kneter wie üblich vorzugsweise durch Zugabe zu der Polymerisat-Schmelze erfolgen. Die erfindungsgemäßen Formmassen können beispielsweise durch Spritzgießen, Strangpressen oder Versintern in Formen zu selbstverlöschenden Formkörpern oder Profilen verarbeitet werden. Sie besitzen nicht nur ein sehr gutes Flammwidrigkeits-Verhalten, sondern gleichzeitig eine hohe Migrationsbeständigkeit des Flammschutzmittels. Die Formmassen lassen sich dabei ohne nachteilige Nebener-

Scheinung, wie Korrosion und Belagsbildung, auf konventionelle Maschinen verarbeiten und liefern Fertigteile mit einem hohen mechanischen Eigenschafts-Niveau.

Die Erfindung wird durch die nachfolgenden Beispiele erläutert. Die in den Beispielen genannten Teile und Prozente beziehen sich, sofern nicht anders angegeben, auf das Gewicht.

Beispiel

Zur Herstellung der flammwidrigen Formmassen wurde ein ABS-Polymerisat aus

A) 30 Teilen eines durch Emulsionspolymerisation hergestellten Pfropfproduktes aus 40 % Styrol und Acrylnitril (70 : 30 und 60 % Polybutadien und

B) 70 Teilen eines Styrol-Acrylnitril-Copolymerisats verwendet. Als Flammschutzmittel wurden bromierte Oligomere des Styrols der allgemeinen Formel (I) mit Bromgehalten von 60 bis 70 % und wechselnden Polymerisationsgraden eingesetzt. Als Flammschutzmittel-Synergist dient Antimontrioxid. Das ABS-Polymerisat wurde mit den bromierten Oligomeren des Styrols und dem Antimontrioxid vermischt und die Mischung in einem Extruder bei 180° bis 250°C geschmolzen, ausgepreßt und granuliert. Das erhaltene Granulat wurde anschließend mittels einer Spritzgußmaschine bei Temperaturen von 200 bis 280°C in die für die verschiedenen Tests erforderlichen Probekörper übergeführt.

Das Brandverhalten der Probekörper wurde nach ASTM-D-2863-70 überprüft. Als Maß hierfür ist in der folgenden Tabelle der Sauerstoff-Index ($n_2$) angegeben. Die Messung des Schmelz-

index $MI_{21,6}$ erfolgte nach DIN 53 735. Die vergleichende Beurteilung der Migration des Flammschutzmittels aus den Fertigteilen wurde einmal in einer Tropenkammer bei 40 bis 60°C, 90 bis 100 % relativer Luftfeuchtigkeit und einer Versuchsdauer von 24 bis 200 Stunden, und zum anderen in einem Trockenschrank bei 60°C und gleicher Laufzeit vorgenommen. Beurteilt wurde dabei die Belagsbildung der Fertigteile nach Beendigung des Tests.

Zu Vergleichszwecken wurde das ABS-Polymerisat in gleicher Weise mit Nonabromdiphenyl als Flammschutzmittel ausgerüstet und getestet.

Die Ergebnisse der einzelnen Versuche sind in der folgenden Tabelle zusammengestellt. Die Versuche Nr. 1 bis 6 sind erfindungsgemäß, Versuch Nr. 7 dient dem Vergleichszweck.

Tabelle

| Versuch Nr. | Flammschutzmittel Art | Flammschutzmittel Polymerisationsgr. 1) | Br-Gehalt i. ABS (%) | Sb-Gehalt i. ABS (%) | $n_2$ | Migration | $a_n$ ($kJ/m^2$) | $MI_{21,6}$ |
|---|---|---|---|---|---|---|---|---|
| 1 | BOS 2) | 190 | 10,7 | 5,0 | 0,25 | n. beobachtet | 30 | 4,6 |
| 2 | BOS | 145 | 11,0 | 4,2 | 0,26 | n. beobachtet | 35 | 6,0 |
| 3 | BOS | 100 | 11,0 | 4,2 | 0,25 | n. beobachtet | 40 | 6,2 |
| 4 | BOS | 48 | 10,8 | 4,2 | 0,26 | n. beobachtet | 46 | 6,7 |
| 5 | BOS | 11 | 11,3 | 4,2 | 0,27 | n. beobachtet | 80 | 10 |
| 6 | BOS | 7 | 10,8 | 5,0 | 0,26 | n. beobachtet | 90 | 11 |
| 7 | Nonabromdiphenyl | | 10,9 | 4,5 | 0,26 | starker Belag | 80 | 10 |

1) ermittelt durch Dampfdruck-Osmonometrie der unbromierten Oligomeren in Toluol bei $25^oC$

2) BOS = bromiertes Oligo-Styrol

Patentansprüche

1. Thermoplastische Formmassen aus

(A) 6 bis 100 Gewichtsprozent, bezogen auf (A + B), eines Pfropfproduktes, hergestellt durch Pfropfpolymerisation von

1. 10 bis 95 Gewichtsprozent, bezogen auf (A), eines Gemisches aus Styrol und Acrylnitril oder deren Alkylderivaten im Gewichtsverhältnis 90 : 10 bis 60 : 40 in Gegenwart von

2. 90 bis 5 Gewichtsprozent, bezogen auf (A), eines kautschukartigen Polymerisats mit einer Glasübergangstemperatur unter 0°C,

(B) 0 bis 94 Gewichtsprozent, bezogen auf (A + B) eines Copolymerisats aus Styrol und Acrylnitril oder deren Alkylderivaten im Gewichtsverhältnis 90 : 10 bis 60 : 40, wobei der Gehalt des kautschukartigen Polymerisats (A 2) in den Formmassen, bezogen auf die Summe von (A + B), 5 bis 40 Gewichtsprozent betragen soll,

(C) einer wirksamen Menge einer organischen Halogenverbindung als Flammschutzmittel sowie

(D) gegebenenfalls weiteren Zusatzstoffen,

dadurch gekennzeichnet, daß diese als Flammschutzmittel halogenierte Styrol-Oligomere enthalten.

2. Thermoplastische Formmassen nach Anspruch 1, dadurch gekennzeichnet, daß diese als Flammschutzmittel kernhalogenierte, thermostabile Styrol-Oligomere enthalten.

3. Thermoplastische Formmassen nach Ansprüchen 1 und 2, dadurch gekennzeichnet, daß es sich bei den halogenierten Styrol-Oligomeren um bromierte Styrol-Oligomere handelt.

4. Thermoplastische Formmassen nach Anspruch 3, dadurch gekennzeichnet, daß die bromierten Styrol-Oligomeren einem Bromgehalt von 40 bis 80 Gewichtsprozent besitzen.

5. Thermoplastische Formmassen nach Ansprüchen 1 bis 4, dadurch gekennzeichnet, daß die halogenierten Styrol-Oligomere einen mittleren Polymerisationsgrad von 3 bis 200 aufweisen.

6. Thermoplastische Formmassen nach Ansprüchen 1 bis 5, dadurch gekennzeichnet, daß die halogenierten Styrol-Oligomeren in der Formmasse in einer Menge von 5 bis 30 Gewichtsprozent, bezogen auf die Summe von (A + B), enthalten sind.

7. Thermoplastische Formmassen nach Ansprüchen 1 bis 6, dadurch gekennzeichnet, daß sie zusätzlich zu den halogenierten Styrol-Oligomeren einen Flammschutzmittel-Synergist enthalten.

8. Thermoplastische Formmassen nach Anspruch 7, dadurch gekennzeichnet, daß diese als Flammschutzmittel-Synergist Antimontrioxyd enthalten.

Europäisches Patentamt

# EUROPÄISCHER RECHERCHENBERICHT

0000141

Nummer der Anmeldung

EP 78 10 0146

| Kategorie | EINSCHLÄGIGE DOKUMENTE<br>Kennzeichnung des Dokuments mit Angabe, soweit erforderlich, der maßgeblichen Teile | betrifft Anspruch |
|---|---|---|
| A | FR - A - 2 207 941 (MONSANTO)<br>* Seite 22, Zeilen 1-21 *<br>-- | 1 |
| A | FR - A - 1 101 025 (BASF)<br>---- | 1 |

KLASSIFIKATION DER ANMELDUNG (Int.Cl.²)

C 08 L 55/02
C 08 L 51/04
C 08 L 25/12

RECHERCHIERTE SACHGEBIETE (Int. Cl.²)

C 08 L 55/02
C 08 L 51/04
C 08 L 25/12

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 06-09-1978 | GIRARD |